(19) **Europäisches Patentamt**
**European Patent Office**
**Office européen des brevets**

(11) **EP 2 554 244 A1**

(12) **EUROPEAN PATENT APPLICATION**
published in accordance with Art. 153(4) EPC

(43) Date of publication:
06.02.2013 Bulletin 2013/06

(21) Application number: 10849082.2

(22) Date of filing: 09.12.2010

(51) Int Cl.:
*B01D 53/92* (2006.01) *B01D 53/62* (2006.01)
*B01D 53/60* (2006.01)

(86) International application number:
**PCT/MX2010/000149**

(87) International publication number:
**WO 2011/122925 (06.10.2011 Gazette 2011/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 20.09.2010 MX MX10010186
29.03.2010 MX MX10003472

(71) Applicant: **Miklos Ilkovics, Roberto Tomás C.P. 53920 Huixquilucan (MX)**

(72) Inventor: **Miklos Ilkovics, Roberto Tomás C.P. 53920 Huixquilucan (MX)**

(74) Representative: **Kuhnen, Rainer K.**
**Kuhnen & Wacker**
**Patent- und Rechtsanwaltsbüro**
**Prinz-Ludwig-Strasse 40A**
**85354 Freising (DE)**

(54) **PROCESS FOR THE REMOVAL OF ACID GASES FROM THE AIR AND FROM COMBUSTION GASES FROM BURNERS AND INTERNAL COMBUSTION ENGINES BY MEANS OF ABSORPTION WITH SODIUM HYDROXIDE SOLUTION AND PROCESS FOR OBTAINING SODIUM CARBONATE IN ORDER TO ACQUIRE CARBON CREDITS**

(57) The present invention consists of an absorption process with a chemical reaction to capture acid gases such as carbon dioxide, sulphur dioxide and nitrogen dioxide from the ambient air and from combustion gases from burners and internal combustion engines using fossil fuels; the aim of the invention being the acquisition of carbon credits in accordance with the "Kyoto protocol on climate change". The process is carried out in a horizontal spray absorber using an 8% solution of sodium hydroxide as absorption liquid, obtaining sodium carbonate, sodium sulphite, sodium nitrite and nitrate as byproducts. These byproducts are converted into commercial products such as calcium carbonate, barium sulphate and ammonium nitrate; for which purpose both the sodium sulphite and the sodium nitrite must previously be converted into sodium sulphate and nitrate by means of an oxidizing agent.

Figure No. 1

**Description**

**FIELD OF THE INVENTION**

The current invention is generally related to the reduction of Green-House gases (GHGs), such as acid gases: carbon dioxide ($CO_2$), sulfur dioxide ($SO_2$), and nitrogen dioxide ($NO_2$) the last two not declared as a part of GHGs; and particularly with the acquisition of carbon credits in accordance with the Kyoto Protocol, through a chemical process that may produce calcium carbonate or sodium carbonate for its marketing; for the latter, the process takes out in an industrial facility with an economic minimum size.

**BACKGROUND OF THE INVENTION**

On December 11, 1997, industrialized countries were committed, in the City of Kyoto, Japan, to execute a set of measures to achieve Green House Gas (GHG's) reduction. The signing governments of such countries agreed in reducing at least 5% in average the pollutant emissions between years 2008 through 2012, having the 1990 levels as a reference. The agreement comes into force on February 16, 2005, after acquiring the same commitments on November 18, 2004 by the Russian Government. This agreement was called "Kyoto protocol about climate change".

As part of the "Kyoto Protocol" an international decontaminate mechanism was created to achieve pollution reduction in pollutant emissions to environment, building a trust of fund to provide economic incentives to private companies that have implemented measures in their own processes to improve environment quality and control the pollutant emissions from their production processes, having the right to emit $CO_2$ as a commodity that can be traded with a price established in the market.

The carbon credit transaction -a carbon credit represents the right to emit one ton of carbon dioxide-allows to mitigate the generation of Green House Gases, promoting a benefit to those companies that do not produce or reduce their Green House Gases emissions, and making pay those companies who produce more than that allowed. By extension, any organization that capture $CO_2$ (or any Green-House gases) has the right to have access to carbon credits, and is subject also to receive the corresponding economic incentives. The capture of CO2 from air and combustion gas by absorption with NaOH solution produces sodium carbonate in solution, which may be concentrated and crystallized for its marketing or treating sodium carbonate solution with lime slurry to obtain calcium carbonate and marketing it, regenerating in this case sodium hydroxide. It is important that in applications of sodium carbonate, this salt is not decomposed returning $CO_2$ to atmosphere, in order to certify carbon credits.

The great majority of works that have been development for Green-House gases reduction are focused in biotechnological processes or tree cultivation and growth, where large extensions of land are cultivated with plants and trees that capture the $CO_2$ and every year achieve the right to get certain number of carbon credits.

With the object to make effective carbon credits through a different way than the traditional, but at the same time as effective as the others, the chemical way was developed, which is sustained in "washing" the atmospheric gases as well as those produced along the combustion in burners and internal combustion engines, that use fossil fuels such as gasoline, diesel, natural gas, etc. and that produce in addition to $CO_2$, sulfur and nitrogen dioxide ($SO_2$ and $NO_2$).

**DETAILED DESCRIPTION OF THE INVENTION**

The characteristics of the process to capture the acid gases from the atmosphere or from the burners and internal combustion motors emissions, consist in "washing" said gases with a sodium hydroxide 2 normal solution (NaOH at 8%), in a specially designed absorption equipment.

The equipment to make effective the acid gas elimination process from atmosphere and from the emitted gases, is a horizontal absorber in which the gases flow (in horizontal way) along the equipment, and perpendicularly receive, in the form of a sprinkler and in the sides, at 90° from vertical, through dispersion nozzles, the alkaline solution that solves and reacts with the solute the acid gases, producing the following reactions:

$$2\ NaOH + CO_2 \rightarrow Na_2CO_3 + H_2O$$

$$2\ NaOH + SO_2 \rightarrow Na_2SO_3 + H_2O$$

$$2\ NaOH + 2NO_2 \rightarrow N_ANO_3 + NaNO_2 + H_2O$$

Carbon dioxide concentrations handled in the process, varied from 0.44% for an urban atmospheric air, up to 16% in combustion gases using natural gas as fuel. Sulfur dioxide concentrations varied from 60 ppm up to 0.2% (2000 ppm) and the nitrogen dioxide from 20 to 69 ppm.

Two equipment of horizontal spray absorption were used to prove the effectiveness of the process, one of 30 cm internal diameter made of austenitic stainless steel in coupling sections of 50 cm, with the objective to study the acid gases absorption mechanism. The other absorber was of 60 cm diameter and 75 cm long sections. Each one of the absorbers sections have three series of nozzle, separated each 10 cm for the 30 cm diameter and 15 cm of separation for the equipment of 60 cm diameter, one series in the upper area and other two at each side at 90°, having a total of 15 nozzles per section.

Two gas fluxes were selected, with global speed of about 3 and 7 m/sec, making fluxes of 800 and 1,800 $m^3$/h. In a perpendicular way the sodium 2N hydroxide solution was passed over the nozzle, at a flux density of 1.0 to 1.2 $Kg/m^2$seg. For these cases, the absorption liquid volumetric flux ranges from 34 to 40 1/h for each nozzle.

Same tests were made with the 60 cm diameter equipment, and only two sections of 75 cm each, and pipes separated 15 cm, having 15 pipes per section, and the gas flows were 3000 $m^3$/h, which corresponds to a global average speed of about 5 m/sec. In this case, the liquid flow density (solution of NaOH 2N) was 2.1 $kg/m^2$seg and the volumetric flow per nozzle was 212 1/h.

The absorption process results with chemical reaction, allowed to reach the following conclusions:

**1.** The controlling resistance to the mass transfer is on the side of the gas, practically considering as no valuable the resistance on the side of liquid.

**2.** The mass transfer coefficient combined with volumetric area, only varies with the global average speed of the gas and does not depend on liquid flow. See Table No. 1.

Table No. 1

| Gas Global Average Speed m/sec | Mass transfer coefficient combined wit volumetric area in Kgmo 1/h $m^3$ |
| --- | --- |
| 3 | 15 |
| 5 | 16 |
| 7 | 17 |

3. Gas flows through the absorber should have global average speeds between 3 and 7 m/sec., as under 3 m/sec, the equipment efficiency is reduced, and over 7 m/sec. a higher pressure is required to make the gas flow, and the liquid dragging is increased, making harder its separation with the baffles installed in the chimney.

4. The absorption liquid flow density may vary from 1.0 to 3.3 $Kg/m^2$seg. Indeed, would not be a problem if the iquid density would be lower to 1.0 $Kg/m^2$seg, just if it would absorb the acid gases contained in the gaseous flow. If higher liquid flow density is used, over 3.3 $Kg/m^2$seg, there would be a risk of having floods in the equipment and also have large pumping equipment unnecessary and also expensive.

The acid gases capture process is complemented by regenerating the sodium hydroxide to be re-used, with milkfish solution of calcium oxide, for the sodium carbonate, and with ammonia hydroxide for the sodium nitrate, oxidizing the sodium nitrite to nitrate with an oxidizing agent. The sodium sulfite should previously oxide to sulfate by an oxidant agent, it is treated with barium chloride for forming barium sulfate that precipitates and sodium chloride that remains in solution. The chemical reactions are the following:

$$Na_2CO_3 + Ca(OH)_2 \rightarrow CaCO_3 + 2\ NaOH$$

$$CaSO_4 + BaCl_2 \rightarrow BaSO_4 + CaCl_2$$

$$NaNO_3 + NH4OH \rightarrow NH4NO_3 + NaOH$$

The calcium carbonate that is formed after is washed and dried, is practically unperceived while it passes the mesh 325 of Taylor series, and can be used for the manufacturing of Mexican handcrafts.

The Barium sulfate that is formed has potential use in the pharmaceutical industry, and the ammonia nitrate can be used as fertilizer.

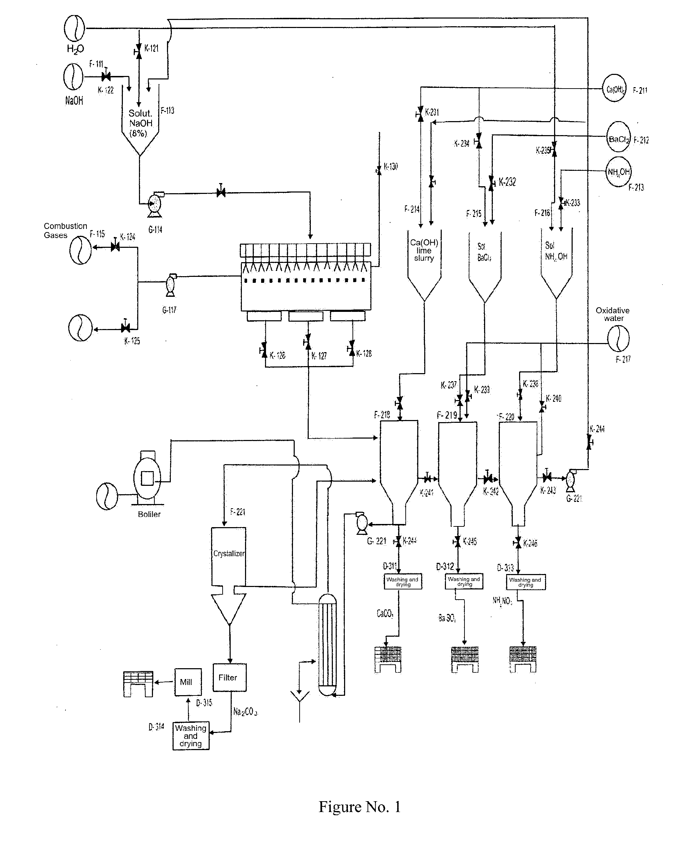

The complete process for the acid gas capture coming either from atmospheric loads or internal combustion gases, have the main objective to validate carbon credits, and its schematic flow is shown in Figure No. 1.

For industrial process it is considered to obtaining sodium carbonate from $CO_2$ capture from the air and combustion gas by absorption with NaOH solution. The process comprises the following steps and operating conditions:

(a) The liquid used for washing the gases is, a 2N sodium hydroxide solution (80 g/l), with a liquid flow density of operating between 2.7 and 3.4 $\frac{Kg}{m^2Seg}$, values that are the optimal industrial operation ones.

(b) The gas flow to be treated is 10,000 $m^3$/h giving a global average speed for both atmospheric air and the combustion gases, between 3 and 7 m/sec.

(c) The temperature of gases and the absorbing solution shall be 22°C, even when the flue gas entering hot into the absorber, in very short time it will take the absorber solution temperature.

(d) The gas pressure at the inlet of the absorber will be 20 mm Hg manometric. The absorber is connected by one end to the atmospheric air or flue gas output, and on the other to the atmosphere for the output of washed gas; atmospheric pressure is considered that of the site where the equipment is installed.

In another preferred embodiment the equipment to carry out the carbon dioxide capture process from the atmosphere and combustion gases, and to produce sodium carbonate, comprises:

1. An horizontal absorber, whereby the gases run (in the horizontal direction) along equipment and perpendicularly receive in the form of a sprinkler in the top and sides, forming an angle 90° in respect of the vertical, through dispersion nozzles, which dissolves the alkaline solution and react with solute of the acidic gases, particularly $CO_2$; chemical reaction that takes place is the following:

$$2\ NaOH + C02 \rightarrow Na_2CO_3 + H_2O$$

2. The industrial absorber consists of seven modules of a meter long, attachable and detachable as required, and 0.85 m inner diameter, made of austenitic stainless. The dispersions nozzles are distributed at 20 cm from one another, both top and at the sides, so that each module of a meter has 15 nozzles, whose size is 1/4 inch. These nozzles "spray" the liquid into small droplets, which increase the mass transfer area, resulting in the absorption of $CO_2$ sought to be captured.

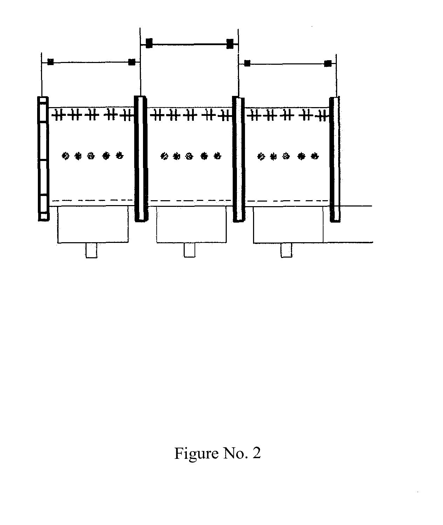

3. In the bottom of the absorber there are perforations for the absorption liquid outflow, which passes to a channel 30 cm height which serves as a hydraulic seal. Figure No. 2 and Figure No. 3 (a), (b) and (c).

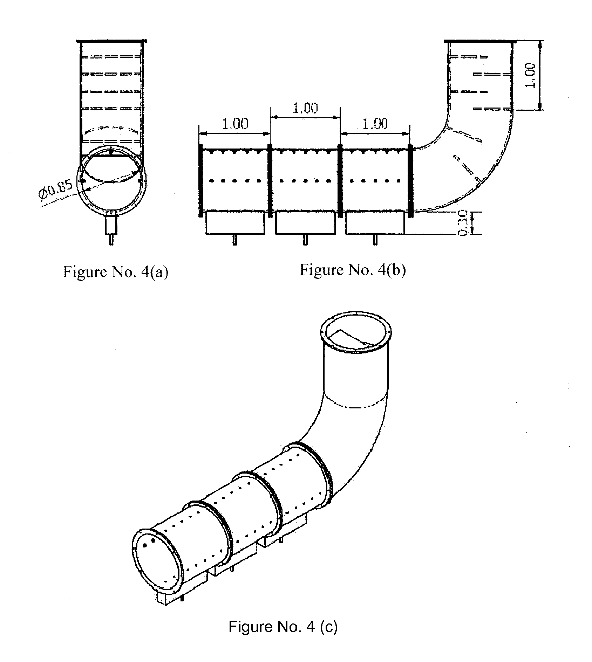

4. The gases to wash enter through one end of the absorber, driven by a fan without direction change, and once the acid components have been captured by the absorbing liquid, gases come out by the other end of the absorber to a chimney making a direction change and with baffles to retain to the drag of the absorption liquid by clean gases that are sent to atmosphere. Figure No. 4 (a), (b) and (c).

The operating conditions to be taken for operating the horizontal absorber are:

(a) The absorbing solution of 80 g NaOH/l (that is 2N) has a flow of 50 $m^3$/h to absorb $CO_2$ which gives a flux density of 3.22 $Kg/m^2$ sec when the gas flow is air and 3.26 $Kg/m^2$ sec for when they are combustion gases; values included within that recommended industrially for flux density of the absorbing liquid.

(b) The gaseous flow of 10,000 $m^3$/h has a gaseous flux density of 4.5 $Kg/m^2$ sec, for air, with a $CO_2$ concentration of 0.044% and 4.8 $kg/m^2$ sec for combustion gases considering a concentration 16% $CO_2$.

(c) In the case of washing of 10,000 $m^3$/h of flue gas is required that the absorber has a length of 5.47 m, so that 6 sections of a meter each will engage and would thus has 90 nozzles for use for 50.0 $m^3$/h of the absorbing solution and the nozzle flow will be 0.556 $m^3$/h.

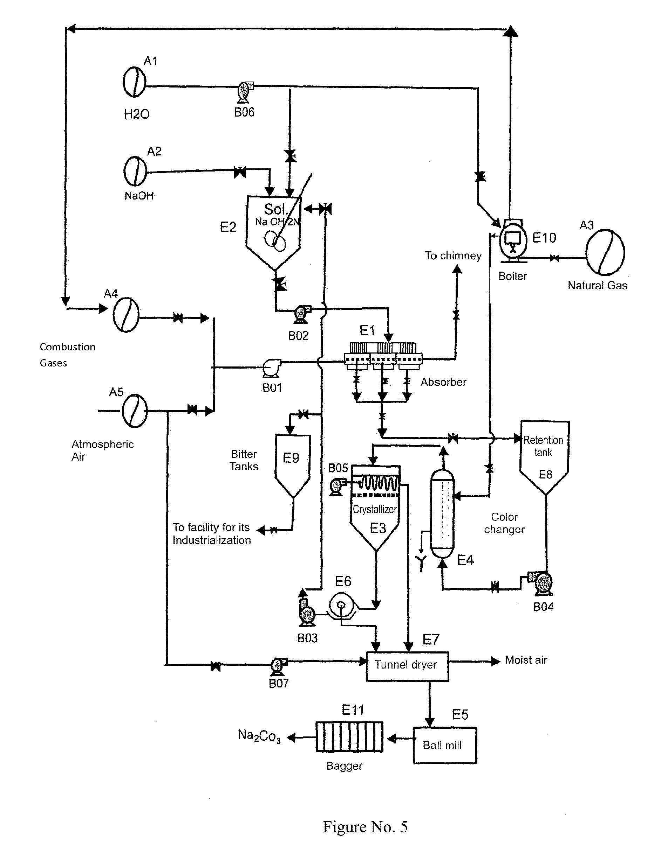

(d) absorption liquid leaving the absorber that carries with it $CO_2$ in the form of $Na_2CO_3$, which is recirculated to the feed tank thereof where it restores the consumed soda and until the concentration of $Na_2CO_3$ reach near saturation, is passed then the solution to a heat exchanger and a basket crystallizer to separate by crystallization this by-product, which is washed with water and dried with hot air and then grind it to the desired commercial granulometry. The remaining liquid is sent to the feed tank of the NaOH solution. Flow diagram of Figure No. 5.

BRIEF DESCRIPTION OF THE DRAWINGS

Figure No. 1 shows the entire flow diagram with the alternatives of either produce calcium carbonate or sodium carbonate. In the first, sodium hydroxide is regenerated by addition of lime slurry, while that in the second is consumed NaOH.

Figure No. 2 shows a horizontal absorber scheme whit three assembled sections of a meter length of each section and 0.85 m inner diameter, representing the dispersion nozzles: 5 in the top 20 cm apart from one another and two rows of five nozzles also each equally spaced at 90° relative to the vertical. Also shows the channel for the absorption liquid exit with a height of 30 cm which serves as hydraulic seal.

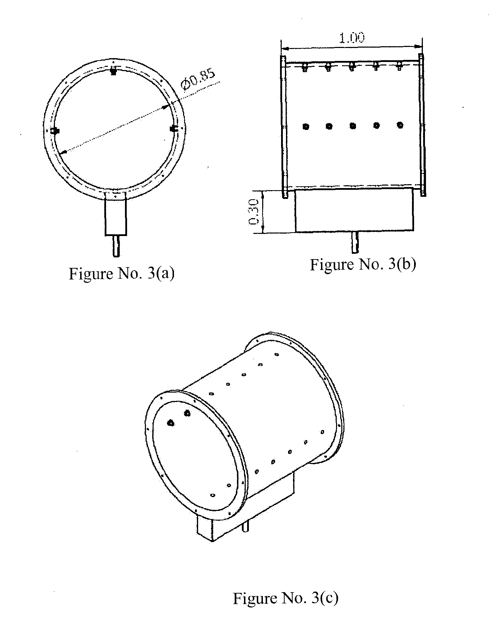

Figure No. 3 shows three schemes: Figure No. 3 (a) straight cross-section of the absorber of internal diameter 0.85 m and the output channel of the absorbing liquid with a height of 30 cm which serves as hydraulic seal; Figure No. 3 (b) a straight cross-section of the absorber of a meter in length, showing the nozzles row of absorption liquid dispersion of 20 cm apart from each other, one in the upper row and two others on each side of the first at an angle of 90° respect to the vertical, with the same number of equally spaced nozzles and also shows the output channel for absorbing liquid with a height of 30 cm as hydraulic seal; and Figure No. 3 (c) an isometric view of a absorber section with the signs for the liquid dispersion nozzles of absorption and the channel for the outlet thereof, with the same dimensions shown in Figures 3 (a) and 3 (b).

Figure No. 4 shows the outlet duct of the clean gases of the absorber: Figure 4 (a) a cut of the straight section of the gases outlet to the chimney of 0.85 m internal diameter; Figure 4 (b) straight cross-section of three sections of a meter in length each, of the horizontal absorber and duct of a meter length to the clean gas outlet to the chimney with its liquid retention screens of absorption which is entrained by the gases to leaving the absorber, also shows the output channel of the absorbing liquid with a height of 30 cm of water seal, and Figure 4 (c) three-section isometric view of the absorber of a meter length of each section and the outlet duct a meter in length with its screens for retaining absorbing liquid entrained by the flue gases to the chimney, also shown in the sections of the absorber, the channel height of 30 cm for the hydraulic seal and the nozzles rows, five for each section separated by 20 cm from one another, for the dispersion of the absorbing liquid to the inlet of the absorber; section of the absorber has three rows each with five nozzles each one, the first row is in the upper part and the other two an angle of 90° respect to the vertical.

EQUIPMENTS, REACTIVES, AND RAW MATERIALS USED:

Equipment and Accessories:

Two spraying horizontal absorbers not packed as described above; of 30 cm and 60 cm of diameter, and in sections of 50 cm for the first one, and 75 cm for the second one, with 15 nozzles each section. These equipments are made of austenitic stainless steel. One tank made of austenitic stainless steel of one $m^3$ for the absorption liquid distribution (solution NaOH $_2$N).

2 Carbon steel tanks of 100 1 for the barium chloride and the ammonia hydroxide solution.

3 Hoopers, one of one $m^3$ for the sodium carbonate reaction with the milkfish and calcium carbonate recovery; other of 200 1 for the barium chloride reaction with the sodium sulfate and produce barium sulfate and finally, other hooper of 200 1 for ammonia reaction with the sodium nitrate and to produce ammonium nitrate.

3 vessels for recovering byproducts.

One centrifugal ventilator to handle gases from 800 to 3,000 $m^3$/h.

One pump of one HP for handling absorption liquid.

One pump of 0.5 HP for the return of the regenerated absorption liquid.

One chimney to exhaust the clean gases free of acid gases, with baffles to hold the liquid that drags the gas to the absorber output.

Pipes and valves as indicated in flow diagram 1.

One recipient of 100 kg for solid sodium hydroxide.

One recipient of 10 Kg for barium chloride.

One 100 1 tank for the ammonium hydroxide.

Reagents:

Methyl Orange Solution
Phenolphthalein alcoholic solution
Ph paper
Hydrochloric acid solution 0.1 N

Measurement Equipment:

Gas analyzer with determiners of carbon dioxide, sulfur and nitrogen, as nitrate and nitrite

Potentiometer
325 mesh of the Taylor series
Analytical balance with sensibility of 0.1 mg
Grain balance with 0.1 g sensibility

Raw materials:

Recipients to hold byproducts
Plastic bags to hold byproducts

Table No. 2

Lab Equipment

| Quantity | Material |
|---|---|
| 2 | Burettes 50 ml |
| 4 | Lab jars 1,000 ml with ground cap |
| 6 | Essay pipes |
| 1 | Grid for essay pipes |
| 2 | Pliers for burettes |
| 1 | Universal stand |
| 1 | Graduated glass 1,000 ml |
| 4 | Precipitated glass 100 ml |
| 1 | Graduated glass 5 ml |
| 1 | Spatula |

For industrial equipment, in Table No. 3 it was concentrated equipment relation required for the present invention, with its key according to Figure No. 5.

Table No. 3

Relationship of economic minimum facility equipment to process 10,000 $m^3$/h flue gas.

| KEY | EQUIPMENT DESCRIPTION |
|---|---|
| E-01 | Horizontal absorber 83 cm inner diameter and seven sections of a meter long with 15 dispersion nozzles per section and a channel with hydraulic seal of 30 cm for liquid output, built in austenitic stainless. |
| E-02 | Absorption liquid feed tank of 50 $m^3$ with 3 m of diameter and 7 m high. With reinforcements and anchors for the floor and bottom outlet; built in austenitic steel. |
| E-03 | basket crystallizer of 6 $m^3$ to handle 13.16 $m^3$/h of 30% solution of $Na_2CO_3$ with a production of 5.24 ton/h crystals. |
| E-04 | heat exchanger and condenser to handle 13.16 $m^3$ of solution 30% of $Na CO_3$. |
| E-05 | Ball mill for production of 5.24 ton/h sodium carbonate. |
| E-06 | Rotary filter for separation and washing of sodium carbonate. |
| E-07 | Conveyorized tunnel dryer for 5 ton/h sodium carbonate and with dried and hot air. |
| E-08 | Retention tank of $Na CO_3$ solution of 5.3 $m^3$ made of austenitic steel, 1.5 m in diameter and 3 m high. |
| E-09 | Tank 3.3 $m^3$ for bitter waste liquid made in carbon steel, 1.5 m in diameter and 3 m high. |
| E-10 | Boiler 10 CV |
| E-11 | Bagger 300 bags/h for $Na_2CO_3$ |

The pumping equipment that requires the facility is located in Table No. 4

Table No. 4

Pump set

| KEY | DESCRIPTION | CAPACITY |
|---|---|---|
| B-01 | centrifugal fan for **10,000** $m^3$/gas/h and maximum pressure of **1.5** atm | **3** HP |

(continued)

| Pump set KEY | DESCRIPTION | CAPACITY |
|---|---|---|
| B-02 | austenitic steel centrifugal pump for **50** m$^3$ alkaline solution/h (feed to the absorber) | **2 HP** |
| B-03 | Austenitic steel centrifugal pump for **50** m$^3$ alkaline sol/h (NaOH tank return of the Na$_2$CO$_3$ solution) | **2 HP** |
| B-04 | austenitic steel centrifugal pump for **50** m$^3$ alkaline sol/h (return to holding tank Na$_2$CO$_3$ solution) | **1 HP** |
| B-05 | Motor-reducer for crystals worm of Na$_2$CO$_3$ of the crystallizer | **1 HP** |
| B-06 | Centrifugal pump in carbon steel for **2** m$^3$ water/h | $^{3/4}$ HP |
| B-07 | Fan for hot air to **3,000** m$^3$ air Hot/h | **1.5 HP** |
| B-08 | Austenitic steel centrifugal pump for **5** m$^3$ sour waste liquid/h (not shown in the flow diagram of Figure No. **4**) | **1 HP** |
| | TOTAL ELECTRIC POWER | **12.25 HP** |

The feeds to the process are found in Table No. **5** and the operating conditions and requirements for processing **10.000** m$^3$/h of combustion gases, are in Table No. **6**.

Table No. **5**

Supply to the process

| KEY | DESCRIPTION OF SUPPLY |
|---|---|
| A-1 | Process water supply |
| A-2 | NaOH Feed in flake |
| A-3 | Natural gas supply to boiler |
| A-4 | Combustion gases supply |
| A-5 | atmospheric air supply |
| A-6 | Bags supply For Na$_2$CO$_3$ |

Table No. **6**

Operating conditions and requirements of the industrial facility for **CO$_2$** capture from flue gases

| OPERATING VARIABLE | MAGNITUDE |
|---|---|
| Gases volumetric flow to treat | **10,000** m$^3$/h |
| Absorption liquid volumetric flow (80NaOH g/l) | **50.0** m$^3$/h |
| Mass flow of sodium hydroxide (Flake) | **4.0** ton/h |
| Process water | 1.5m$^3$/h |
| Mean gas pressure | **0.771** atm |
| Mean gas temperature | **22°C** |
| Saturated steam at **1** atm | **414.7** Kg/h |
| Natural gas for boiler | **37.2** m$^3$/h |
| Required electrical power | **15** Kw |
| Mass flow of sodium carbonate | **5.24** ton/h |

Facility shall be deemed to be able to work **24** hours per day and **322** days per year, this is only **46** weeks a year, leaving a week for two months for maintenance, locate changes, if required. In the Table No. **7** will have the energy consumption of the facility per year.

The facility in its economic minimum size, as shown in the present invention is highly cost effective for treating flue gases, with an internal rate of return of about **60%** and a balance of **13%**. Not so for atmospheric air treatment where benefit is required to perform the capture of carbon dioxide.

The break-even point indicates production capacity such that benefits per product sales and accreditation of carbon credits equal to the sum of the fixed and variable costs, i.e., after this value are gains and below it there are losses.

Table No. **7**

Energetic consumptions of facility operating **10.000** m$^3$/h of flue gases per year of **322** days by **24** hours per day.

| REQUIREMENTS | ANNUAL CONSUMPTION |
| --- | --- |
| Total Electricity | 88077.6 Kw-h/year |
| Saturated steam at 0.771 atm | 3205 Ton/year |
| Gasoline for a utility vehicle | 6.900 l/year |
| Natural gas for boiler | 287,481.6 m$^3$/year |
| Consumed carbon credits | 421.6 |

In an embodiment, the process of this invention comprises the following steps:

(a) Capturing carbon dioxide from atmospheric air and combustion gas of burners and internal combustion engines, using a fan for directing them to the horizontal comminuting absorber.
(b) Air supply and combustion gas containing carbon dioxide horizontal comminuting absorber in which gases run (in the horizontal direction) along the equipment.
(c) Absorption of **CO$_2$** by means of a NaOH solution to **8%,** which is injected perpendicularly in the form of sprinkler and at sides **90°** to respect vertical through dispersion nozzles that dissolves and reacts with the carbon dioxide producing **Na$_2$CO$_3$.**
(d) Separation of sodium carbonate of the absorber solution by concentration up to saturation, heating and crystallization. The crystals **Na$_2$CO$_3$** were washed with water and dried with hot air and then milled to desired commercial size.

In another preferred embodiment, the absorber comprises:

(a) A tubular body segmented into seven sections of 1 meter long each.
(b) Each section has three nozzle series, one on top and the other two on each side of the first forming an angle 90°; each nozzle is spaced at **20** cm from one another, making a total of **15** nozzles per section.
(c) A channel in the bottom of the tubular body for collecting the absorption liquid with **CO$_2$** absorbed through perforations, which has a height of **30** cm as hydrostatic seal.

ADVANTAGES OF THE INVENTION

The process for producing of sodium carbonate from the capture of carbon dioxide from the air and flue gas by absorption with a sodium hydroxide solution in a horizontal comminuting absorber, allows equipment with this position, to manage higher speeds for gas flow and not require a large equipment as upright absorber handles global gas velocities up to **1** m/sec; whereas same equipment may operate horizontally overall gas velocities up to **7** m/sec.
The capture of the carbon dioxide through a sodium hydroxide solution enables the formation of sodium carbonate which represents the transformation of soda by carbonate with an added value of **1:1.25.**
The process contributes to reduce of the greenhouse effect reducing the carbon dioxide content in the air and combustion gases from burners and internal combustion engines which use fossil fuels.
With the reduction of the greenhouse effect before capture **CO$_2$,** may be accredited carbon credits that help make this process more cost effective, in addition to do good to mankind, also pays off utilities to whom uses the process.

**Claims**

1. Acid gases absorption from the atmospheric air or combustion gases coming from burners and internal combustion motors that use fossil fuels, by means of a sodium hydroxide solution, **characterized by** following steps:

(a) capturing of acid gases coming from the atmospheric air and from combustion gases of burners and internal combustion motors, by means of a fan for directing them to horizontal spray absorber;
(b) air and combustion gases supplying containing acid gases of the horizontal spray absorber in which gases run (in horizontal direction) along the equipment;
(c) acid gases absorbing by means of a 8% NaOH solution, which is injected perpendicularly in the form of sprinkler and to the sides, at 90° respect to the vertical through dispersion nozzles that dissolve and react with the acid gases, producing Na$_2$CO$_3$, Na$_2$SO$_3$, NaNO$_2$ and NaNO$_3$;
(d) separating the carbonate from absorber solution, as calcium carbonate by means of the addition of lime slurry and regenerating the sodium hydroxide; the precipitated carbonate is washed with water and dried with hot air for marketing, which is an impalpable powder passing the mesh 325 of Taylor series;

(e) sulfite separating by means of barium chloride addition and an oxidizing agent to precipitate it as barium sulfate and forming sodium chloride, the barium sulfate obtained is washed with water and dried with hot air, for its marketing;

(f) nitrite and nitrate separating by means of the addition of ammonium hydroxide to react with the nitrate and an oxidizing agent to obtain only ammonium nitrate, the crystals of ammonium nitrate are washed with water and dried with hot air for its marketing;

(g) in an industrial alternative the sodium carbonate is separated without the addition of lime slurry, **characterized by** the concentration, by recirculating the solution to deposit of the absorber solution up to saturation, it is passed to a heat exchanger for heating the solution to then pass it to a basket crystallizer for crystallizing $Na_2CO_3$, after washing with water, drying with hot air and finally grinding to the granulometry commercially desired.

2. The process according to claim 1, **characterized in that** in step (d) the sodium hydroxide solution regenerated is sent to the supply deposit of absorber liquid to be reused after adjustment of the concentration to 8%.

3. The process according to claim 1, **characterized in** the absorber carries out the following steps:

(a) absorbing carbon dioxide contained in the gases to be cleaned by producing sodium carbonate in solution and removing $CO_2$ present in the gaseous flow;
(b) absorbing sulfur dioxide contained in the gases to be cleaned by producing sodium sulphite in solution and removing $SO_2$ present in the gaseous flow;
(c) absorbing nitrogen dioxide contained in the gases to be cleaned by producing sodium nitrite and nitrate in solution and removing $NO_2$ present in the gaseous flow.

4. The process according to claim 1, **characterized in that** average gas velocity ranges from 3 to 7 m/sec and the absorbing liquid flow varies from 1.0 to 3.3 $Kg/m^2sec$.

5. A horizontal spray absorber for absorbing acid gases from air and combustion gases coming from burners and internal combustion motors, **characterized in that** comprises:

(a) a tubular body segmented into two or three sections;
(b) each section having three series of nozzles spaced equidistantly from each other, one on top and the other two on each side of the first forming an angle of 90°, resulting in a total of 15 nozzles per section;
(c) a channel in the bottom of the tubular body for collecting absorption liquid with the absorbed acid gases, through perforations; which has a height of 10 cm as hydrostatic seal.

6. Based on byproducts obtained in accordance with claim 3 items (a), (b) and (c), carbon credits that will be accredited in accordance with the Kyoto protocol may be calculated.

7. The process according to claim 1, **characterized in that** the sodium carbonate solution formed in the step (g) is sent to the absorber liquid supply deposit to restore consumed sodium hydroxide adjusting the concentration to 8%.

8. The process according to claim 1, **characterized in that** in step (c) $CO_2$ capture is performed in a horizontal spray absorber to produce sodium carbonate, cleaning the air and combustion gases thus reducing greenhouse effect to environment.

9. The process according to claim 1, **characterized in that** in step (b) the gas flow is 10,000 $m^3/h$ with a flux density of 4.5 $Kg/m^2sec$ for the air with 0.044% $CO_2$ and 4.8 $Kg/m^2sec$ for the flue gases with 16% $CO_2$.

10. An horizontal spray absorber for absorbing carbon dioxide from the air and combustion gases coming from burners and internal combustion motors, **characterized by** comprising:

(a) a tubular body segmented into seven sections of a meter long each section and 0.85 m inner diameter made of austenitic steel;
(b) each section having three series of nozzles spaced equidistantly between themselves, one at the top and the other two on each side of the first forming an angle of 90°, resulting in a total of 15 nozzles per section.
(c) a channel at the bottom of the tubular body for collecting the absorption liquid with absorbed $CO_2$, through

perforations, which has a height of 30 cm as a hydrostatic seal.

Figure No. 1

Figure No. 2

Figure No. 3(a)

Figure No. 3(b)

Figure No. 3(c)

Figure No. 4(a)

Figure No. 4(b)

Figure No. 4 (c)

Figure No. 5

# INTERNATIONAL SEARCH REPORT

| | International application No. |
|---|---|
| | PCT/MX2010/000149 |

### A. CLASSIFICATION OF SUBJECT MATTER

**See extra sheet**

According to International Patent Classification (IPC) or to both national classification and IPC

### B. FIELDS SEARCHED

Minimum documentation searched (classification system followed by classification symbols)
B01D

Documentation searched other than minimum documentation to the extent that such documents are included in the fields searched

Electronic data base consulted during the international search (name of data base and, where practicable, search terms used)

EPODOC, INVENES, WPI, TXT

### C. DOCUMENTS CONSIDERED TO BE RELEVANT

| Category* | Citation of document, with indication, where appropriate, of the relevant passages | Relevant to claim No. |
|---|---|---|
| X | US 4369167 A (WEIR JR ALEXANDER) 18.01.1983, column 4, line 35 - column 7, line 24; figure 1. | 5,10 |
| X | US 3532595 A (MO OCH DOMSJOE AB) 06.10.1970, example 2, figure 5. | 5,10 |
| A | US 2009104098 A1 (SINGH UDAY) 23.04.2009, paragraphs [21, 26-34, 67-68]. | 1-10 |
| A | EP 1201290 A1 (EBARA CORP) 02.05.2002, paragraphs [14 - 16, 27, 30]. | 1-10 |
| A | US 4690697 A (SCHWARTZ ARTHUR G ET AL.) 01.09.1987, column 3, line 48 - column 6, line 20. | 1-10 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 18/05/2011 | **(13/07/2011)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | M. García González Telephone No. 91 3495315 |

Form PCT/ISA/210 (second sheet) (July 2009)

## INTERNATIONAL SEARCH REPORT

Information on patent family members

| International application No. |
| --- |
| PCT/MX2010/000149 |

| Patent document cited in the search report | Publication date | Patent family member(s) | Publication date |
| --- | --- | --- | --- |
| US4369167 A | 18.01.1983 | DE2342814 AC | 06.03.1975 |
| | | US3948608 A | 06.04.1976 |
| | | US4102982 A | 25.07.1978 |
| | | CA1040840 A | 24.10.1978 |
| | | US4481170 A | 06.11.1984 |
| US3532595 A | 06.10.1970 | BE681979 A | 14.11.1966 |
| | | NL6607620 A | 05.12.1966 |
| | | NL141594 B | 15.03.1974 |
| | | FR1481806 A | 19.05.1967 |
| | | SE308657 B | 17.02.1969 |
| | | GB1153039 A | 21.05.1969 |
| | | DE1692868 B | 23.12.1971 |
| | | FI46194 B | 02.10.1972 |
| | | FI46194 C | 24.01.1977 |
| | | YU104466 A | 30.04.1973 |
| | | YU31762 B | 31.10.1973 |
| | | NO128032 B | 17.09.1973 |
| | | PL79135 B | 30.06.1975 |
| | | CS177002 B | 29.07.1977 |
| US2009104098 A | 23.04.2009 | WO2009052313 A | 23.04.2009 |
| | | EP2217351 A | 18.08.2010 |
| | | EP20080839557 | 16.10.2008 |
| EP1201290 A | 02.05.2002 | WO0105489 A | 25.01.2001 |
| | | CA2379709 A | 25.01.2001 |
| | | AU6021100 A | 05.02.2001 |
| | | EP20000946417 | 19.07.2000 |
| | | CN1361711 A | 31.07.2002 |
| | | CN1276787 C | 27.09.2006 |
| | | US2005132883 A | 23.06.2005 |
| US4690697 A | 01.09.1987 | NONE | |

Form PCT/ISA/210 (patent family annex) (July 2009)

**INTERNATIONAL SEARCH REPORT**

International application No.

PCT/MX2010/000149

CLASSIFICATION OF SUBJECT MATTER

*B01D53/92* (2006.01)
*B01D53/62* (2006.01)
*B01D53/60* (2006.01)